# EUROPEAN PATENT APPLICATION

(11) **EP 4 683 127 A1**
(43) Date of publication of application: **21.01.2026**
(21) Application number: 23932688.7
(22) Date of filing: 18.08.2023
(51) Int. Cl.: H01R 13/514, H01R 13/516, H01R 13/42

(54) **CONNECTOR, ENERGY STORAGE MODULE AND ENERGY STORAGE DEVICE**

(30) Priority: 10.04.2023 CN 202320863324 U
(71) Applicant: Huawei Digital Power Technologies Co., Ltd., Shenzhen, Guangdong 518043 (CN)
(72) Inventor: XU, Xinyu, Shenzhen, Guangdong 518129 (CN); LIU, Chao, Shenzhen, Guangdong 518129 (CN); XIA, Quanfei, Shenzhen, Guangdong 518129 (CN); RAN, Xiaoke, Shenzhen, Guangdong 518129 (CN); ZHANG, Chunlei, Shenzhen, Guangdong 518129 (CN); ZHANG, Xiufeng, Shenzhen, Guangdong 518129 (CN); ZENG, Qiubin, Shenzhen, Guangdong 518129 (CN)
(74) Representative: Maiwald GmbH
(86) International application number: PCT/CN2023/113711
(87) International publication number: WO 2024/212415

(57) **Abstract**

A connector, an energy storage module, and an energy storage apparatus are disclosed, and relate to the field of energy technologies, to resolve a problem that a connector terminal is prone to pin dislodgement. The connector includes a housing, a first connection terminal, and a locking structure. A first mounting hole extending in a first direction and a mounting groove extending in a second direction are provided on the housing, and the second direction is perpendicular to the first direction. The first connection terminal is inserted into the first mounting hole, and a limiting groove is provided on the first connection terminal. The locking structure is slidably connected to the mounting groove, a limiting protrusion is disposed on the locking structure, and when the locking structure slides to a first position, the limiting protrusion is in the limiting groove, to limit the first connection terminal from moving in the first direction. When the foregoing structure is used, pluggable mounting between energy storage modules can be implemented. **In** a stacking process of the energy storage modules, even if the connectors are subjected to heavy impact, pin dislodgement does not occur, and connection reliability can be ensured regardless of oblique insertion or vertical drop.

## Description

This application claims priority to Chinese Patent Application No. 202320863324.2, filed with the China National Intellectual Property Administration on April 10, 2023 and entitled "CONNECTOR, ENERGY STORAGE MODULE, AND ENERGY STORAGE APPARATUS", which is incorporated herein by reference in its entirety.

### TECHNICAL FIELD

This application relates to the field of energy technologies, and in particular, to a connector, an energy storage module, and an energy storage apparatus.

### BACKGROUND

Residential energy storage products are widely used, with increasing attention to minimal mounting experience of clients and usage flexibility. For combined mounting of battery packs (combined batteries), use of a wiring-free connection manner gradually becomes a main choice, and use of a pluggable connector gradually becomes a mainstream solution on the market.

To improve backup power of an energy storage product, a cell evolves toward large energy density, and a weight of a battery pack increases accordingly. When a conventional pluggable connector is subjected to heavy impact, a terminal (pin, pin needle) is weak in retention, and pin dislodgement is likely to occur, making it difficult to ensure reliable connection of the connector. Moreover, once pin dislodgement occurs, the connector is permanently damaged and cannot be repaired.

### SUMMARY

This application provides a connector, an energy storage module, and an energy storage apparatus, to improve connection reliability of the connector, and further ensure reliable connection for combined mounting of battery packs.

According to a first aspect, an embodiment of this application provides a connector. The connector may include a housing, a first connection terminal, and a locking structure. A first mounting hole extending in a first direction and a mounting groove extending in a second direction may be provided on the housing, and the second direction is perpendicular to the first direction. The first connection terminal may be inserted into the first mounting hole, and a limiting groove may be provided on the first connection terminal. The locking structure may be slidably connected to the mounting groove, a limiting protrusion may be disposed on the locking structure, and when the locking structure slides to a first position, the limiting protrusion is in the limiting groove, to limit the first connection terminal from moving in the first direction.

In the technical solution provided in this application, the connector may be used as a connector of energy storage modules such as battery packs, and may be used in a scenario of stacking heavy energy storage modules, to implement pluggable mounting between the energy storage modules. In a stacking process of the energy storage modules, even if the connectors are subjected to heavy impact, pin dislodgement does not occur, and connection reliability can be ensured regardless of oblique insertion or vertical drop, to implement blind-insertion mounting in a heavy stacking scenario.

In a specific implementation solution, a sliding rail may be disposed on a side wall of the mounting groove, and a sliding groove cooperating with the sliding rail may be provided on the locking structure; or a sliding groove may be provided on a side wall of the mounting groove, and a sliding rail cooperating with the sliding groove may be disposed on the locking structure. In this way, a sliding track of the locking structure in the mounting groove can be limited.

In a specific implementation solution, a first end of the locking structure is inserted into the mounting groove. A locating protrusion may be disposed at a second end of the locking structure, and a locating groove may be provided at an end part that is of the mounting groove and that is close to the second end of the locking structure; or a locating groove may be provided at a second end of the locking structure, and a locating protrusion may be disposed at an end part that is of the mounting groove and that is close to the second end of the locking structure. When the locking structure slides to the first position, the locating protrusion is clamped into the locating groove. The locking structure can be locked through cooperation between the locating protrusion and the locating groove.

In a specific implementation solution, the first end of the locking structure is inserted into the mounting groove. A stop protrusion may be disposed at an end part that is of the mounting groove and that is close to the first end of the locking structure, and when the locking structure slides to the first position, the first end of the locking structure abuts against the stop protrusion. This can limit a sliding stroke of the locking structure.

In a specific implementation solution, a length of the limiting protrusion in the first direction may be less than a length of the limiting groove in the first direction. When the locking structure slides to the first position, there may be a specific gap between at least one end of the limiting protrusion and the limiting groove in the first direction, so that interference between the locking structure and the first connection terminal can be avoided when the locking structure is removed. This facilitates the locking structure being pushed from the pre-mounting position to the first position, and facilitates removal of the locking structure.

In a specific implementation solution, there may be a plurality of first mounting holes, and the plurality of first mounting holes may be arranged in the second direction. There may be a plurality of first connection terminals, and the plurality of first connection terminals may be respectively inserted into the plurality of first mounting holes. There may be a plurality of limiting protrusions, and the plurality of limiting protrusions may be arranged in the second direction. Mounting of the plurality of first connection terminals is convenient.

In a specific implementation solution, there may be the plurality of first mounting holes, the plurality of first mounting holes may be arranged in a third direction, and the third direction is perpendicular to the second direction. There may be the plurality of first connection terminals, and the plurality of first connection terminals may be respectively inserted into the plurality of first mounting holes. There may be the plurality of limiting protrusions, and the plurality of limiting protrusions may be disposed on two sides of the locking structure in the third direction. Mounting of the plurality of first connection terminals is convenient, and locking of the plurality of first connection terminals can be implemented.

In a specific implementation solution, the connector may further include a second connection terminal. A second mounting hole extending in the first direction may be provided on the housing, and the second connection terminal may be inserted into the second mounting hole. A function of the second connection terminal may be different from that of the first connection terminal, and the connector has rich functions.

In a specific implementation solution, a temperature sensor may be disposed on the housing, and the temperature sensor may be disposed close to the second connection terminal. The temperature sensor may detect a temperature of the second connection terminal. This improves safety of the connector.

According to a second aspect, an embodiment of this application further provides an energy storage module. The energy storage module may include an energy storage portion and the connector in any one of the possible implementation solutions of the first aspect, and the connector may be electrically connected to the energy storage portion. The energy storage module provided in this application may be stably connected to another energy storage module.

According to a third aspect, an embodiment of this application provides an energy storage apparatus. The energy storage apparatus may include a plurality of energy storage modules in any one of the possible implementation solutions of the second aspect. The plurality of energy storage modules may be stacked in a height direction, and the energy storage modules may be electrically connected through the connector. The energy storage apparatus provided in this application has high reliability.

According to a fourth aspect, an embodiment of this application provides an energy storage apparatus. The apparatus includes a plurality of energy storage modules, the plurality of energy storage modules are stacked in a height direction, the energy storage modules are electrically connected through the connector, the energy storage module includes a battery and a power conversion unit, each battery is connected in parallel through the connector after being connected to a corresponding power conversion unit in series, a temperature sensor is disposed at a connection terminal of the connector, and the temperature sensor is configured to collect a temperature at the connection terminal. The power conversion unit is configured to reduce, in response to that a value of the temperature being greater than a first threshold, charging and discharging power of the battery connected in series to the power conversion unit; and/or the power conversion unit stops working in response to the temperature being greater than a second threshold, and the first threshold is less than the second threshold and is greater than 0.

### BRIEF DESCRIPTION OF DRAWINGS

FIG. 1 is a diagram of assembling of a partial structure of a connector according to an embodiment of this application;
FIG. 2 is a diagram of disassembling of a partial structure of a connector according to an embodiment of this application;
FIG. 3 is a diagram of assembling of a partial structure of a connector according to an embodiment of this application;
FIG. 4 is a diagram of disassembling of a partial structure of a connector according to an embodiment of this application;
FIG. 5 is a diagram of assembling of a partial structure of a connector according to an embodiment of this application;
FIG. 6 is a diagram of a structure of a housing of a connector according to an embodiment of this application;
FIG. 7 is a diagram of a structure of a housing of a connector according to an embodiment of this application;
FIG. 8 is a diagram of connection of a temperature sensor of a connector according to an embodiment of this application;
FIG. 9 is a diagram of a structure of a housing of a connector according to an embodiment of this application;
FIG. 10 is a diagram of a structure of a second connection terminal of a connector according to an embodiment of this application;
FIG. 11 is a diagram of a structure of a first connection terminal of a connector according to an embodiment of this application;
FIG. 12 is a diagram of a structure of a housing of a connector according to an embodiment of this application;
FIG. 13 is a diagram of a structure of an energy storage module according to an embodiment of this application;
FIG. 14 is a diagram of a structure of an energy storage apparatus according to an embodiment of this application;
FIG. 15 is a diagram of disassembling of a partial structure of an energy storage apparatus according to another embodiment of this application;
FIG. 16 is a diagram of an architecture of a photovoltaic energy storage system according to an embodiment of this application;
FIG. 17 is a diagram of stacking of energy storage apparatuses according to an embodiment of this application;
FIG. 18 is a diagram of a structure of a battery pack in an energy storage apparatus according to an embodiment of this application;
FIG. 19 is a diagram of a structure of a battery pack in an energy storage apparatus according to an embodiment of this application;
FIG. 20 is a diagram of assembling of a first connector and a second connector according to an embodiment of this application;
FIG. 21 is a diagram of a first structure of a first connector in an energy storage apparatus according to an embodiment of this application;
FIG. 22 is a diagram of a first structure of a second connector in an energy storage apparatus according to an embodiment of this application;
FIG. 23 is a diagram of a second structure of a first connector in an energy storage apparatus according to an embodiment of this application; and
FIG. 24 is a diagram of assembling of a first connector and a first connection terminal in an energy storage apparatus according to an embodiment of this application.

Reference numerals: 100: housing; 200: first connection terminal; 300: locking structure; 400: second connection terminal; 500: temperature sensor; 600: signal male terminal; 700: signal male terminal mounting hole; 800: power male terminal mounting hole; 900: energy storage portion; 110: BMS device; 120: base; 130: battery main control unit; 101: first mounting hole; 102: mounting groove; 103: second mounting hole; 201: limiting groove; 202: first wire; 301: limiting protrusion; 302: locating protrusion; 303: removal hole; 401: crown spring; 501: line; 801: second supporting spring coil; 1021: sliding rail; 1022: locating groove; 1023: stop protrusion; 1031: first supporting spring coil; 1000: photovoltaic energy storage system; 1001: power converter; 1002: energy storage apparatus; 1003: photovoltaic array; 1004: power grid; 1005: external load; 510, 511, 512, and 513: battery pack; 520: BCU; 540: first connector; 541: protection part; 5102: lower surface of the battery pack; 5101: upper surface of the battery pack; 550: second connector; 551: groove; 5502: second side; 554: second accommodation cavity; 5421: first mounting hole; 5521: second mounting hole; 542: plug; 552: socket; 5105: first connection terminal; 5106: second connection terminal.

### DESCRIPTION OF EMBODIMENTS

To make the objectives, technical solutions, and advantages of this application clearer, the following further describes embodiments of this application in detail with reference to the accompanying drawings. However, example implementations may be implemented in a plurality of forms, and should not be construed as being limited to implementations described herein. Identical reference numerals in the accompanying drawings indicate identical or similar structures. Therefore, repeated description thereof is omitted. Expressions of positions and directions in embodiments of this application are described by using the accompanying drawings as an example. However, changes may be also made as required, and all the changes fall within the protection scope of this application. The accompanying drawings in embodiments of this application are merely used to illustrate a relative position relationship and do not represent an actual scale.

It should be noted that specific details are set forth in the following descriptions to facilitate understanding of this application. However, embodiments of this application can be implemented in a plurality of manners different from those described herein, and a person skilled in the art can make similar inferences without departing from the connotation of embodiments of this application. Therefore, this application is not limited to the specific implementations disclosed below.

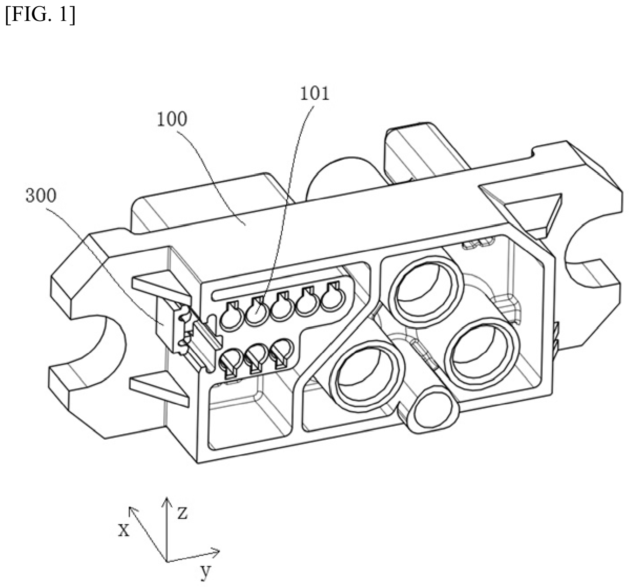

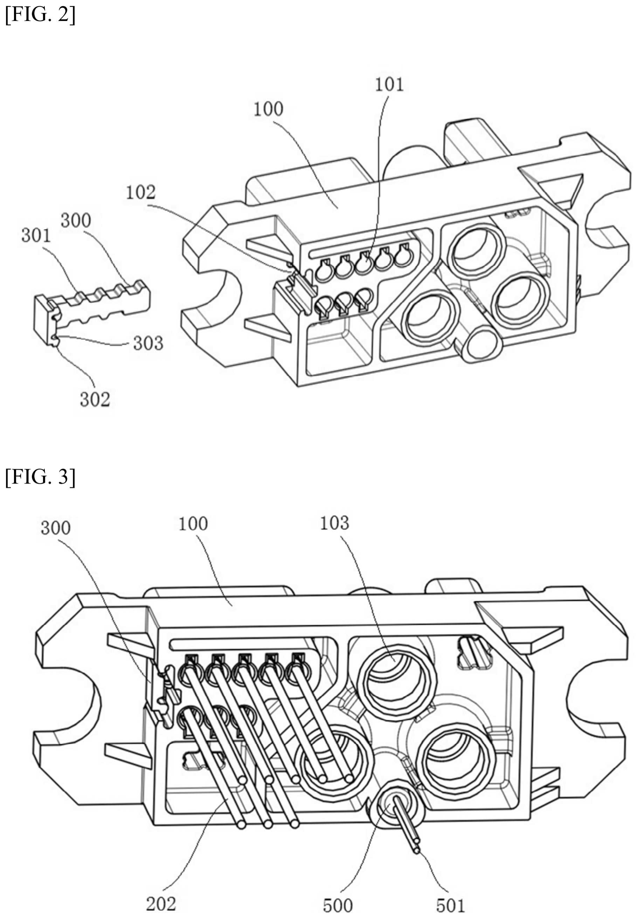

Refer to FIG. 1 and FIG. 2. FIG. 1 is a diagram of assembling of a partial structure of a connector according to an embodiment of this application. FIG. 2 is a diagram of disassembling of a partial structure of a connector according to an embodiment of this application. With reference to FIG. 1 and FIG. 2, the connector provided in this embodiment of this application includes a housing
100, a first connection terminal, and a locking structure 300. Both the first connection terminal and the locking structure 300 are disposed on the housing 100. In specific implementation, the housing 100 may be an integrally formed plastic housing with a simple structure and low costs. A first mounting hole 101 extending in a first direction and a mounting groove 102 extending in a second direction may be provided on the housing 100, and the second direction is perpendicular to the first direction. Refer to coordinate directions in FIG. 1. A direction indicated by an x-axis is the first direction, and a direction indicated by a y-axis is the second direction.

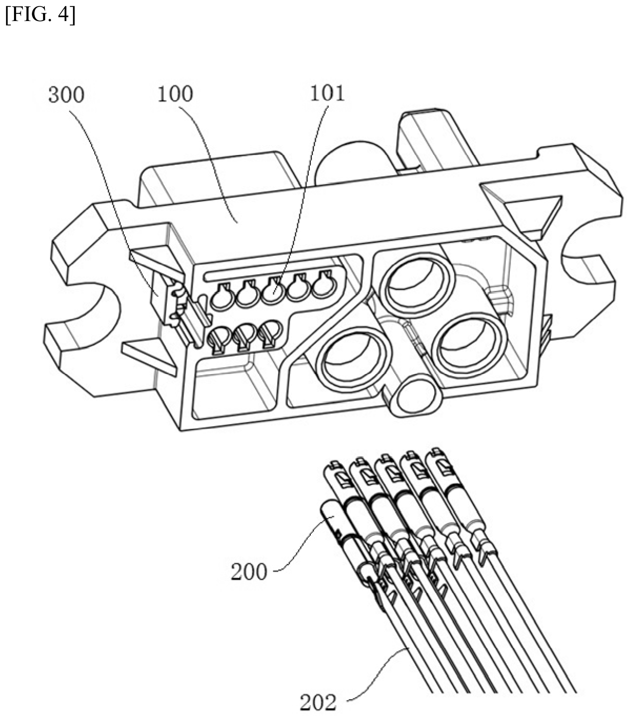

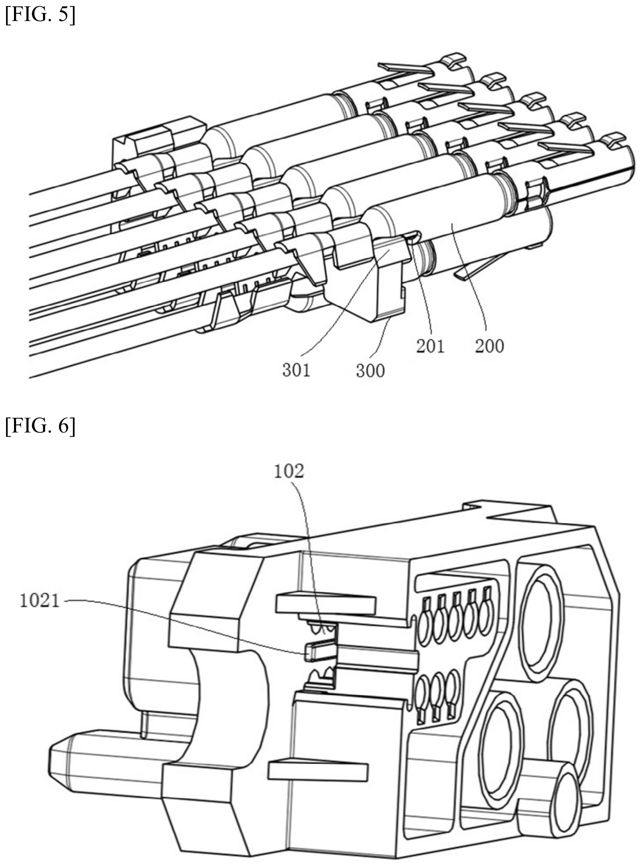

FIG. 3 is a diagram of assembling of a partial structure of a connector according to an embodiment of this application. FIG. 4 is a diagram of disassembling of a partial structure of a connector according to an embodiment of this application. FIG. 5 is a diagram of assembling of a partial structure of a connector according to an embodiment of this application. With reference to FIG. 3, FIG. 4, and FIG. 5, the first connection terminal 200 is inserted into the first mounting hole 101, so that the first connection terminal 200 is assembled onto the housing 100. In actual application, the first connection terminal 200 may be used as a signal terminal (signal pin) of the connector. The first connection terminal 200 may be a stamping terminal, so that material costs and assembling costs are low. A limiting groove 201 is provided on the first connection terminal 200. The locking structure 300 is slidably connected to the mounting groove, so that the locking structure 300 is assembled onto the housing 100. Refer to FIG. 2 together. A limiting protrusion 301 is disposed on the locking structure 300.

In specific implementation, the locking structure 300 may be pre-mounted on the housing 100, and the locking structure 300 is in a pre-mounting position. In this case, the limiting protrusion 301 avoids the first mounting hole 101. Then, after crimping the first wire 202, the first connection terminal 200 is inserted into the first mounting hole 101. After the first connection terminal 200 is inserted in place, the locking structure 300 is pushed to slide to a first position, and the locking structure 300 remains at the first position. In this case, the limiting protrusion 301 is in the limiting groove 201 of the first connection terminal 200, so that the locking structure 300 can limit the first connection terminal 200 from moving in the first direction. In this way, pin dislodgement does not occur when the first connection terminal 200 is subjected to a stress.

The connector provided in this embodiment of this application may be used as a connector of energy storage modules such as battery packs, and may be used in a scenario of stacking heavy energy storage modules, to implement pluggable mounting between the energy storage modules. In a stacking process of the energy storage modules, even if the connectors are subjected to heavy impact, pin dislodgement does not occur, and connection reliability can be ensured regardless of oblique insertion or vertical drop, to implement blind-insertion mounting in a heavy stacking scenario. Specifically, the battery pack may be an energy storage apparatus in which a plurality of cells are combined in series or parallel connection manner (to form a cell group), may be charged and discharged independently, and may be equipped with a battery management unit (battery management unit, BMU), or the like.

FIG. 6 is a diagram of a structure of a housing of a connector according to an embodiment of this application. As shown in FIG. 6, in a possible implementation, a sliding rail 1021 may be disposed on a side wall of the mounting groove 102, and a sliding groove (not shown in the figure) cooperating with the sliding rail 1021 may be provided on the locking structure. In this way, a sliding track of the locking structure in the mounting groove 102 can be limited in a manner in which the sliding rail 1021 cooperates with the sliding groove.

In another possible implementation, similarly, the sliding track of the locking structure in the mounting groove 102 may be limited in a manner in which the sliding rail cooperates with the sliding groove. The implementation is different from the foregoing implementation in that positions at which the sliding rail and the sliding groove are disposed are changed. Specifically, the sliding groove is provided on the side wall of the mounting groove 102, and the sliding rail cooperating with the sliding groove is disposed on the locking structure.

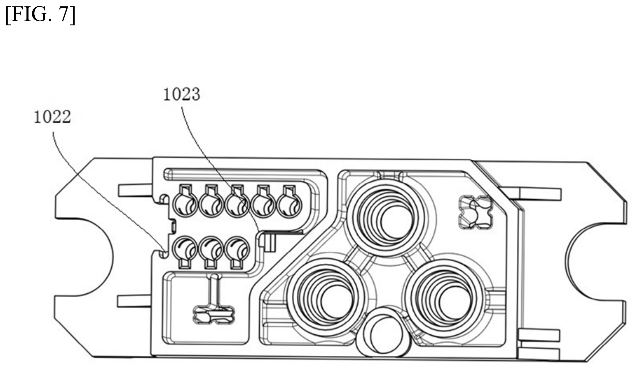

FIG. 7 is a diagram of a structure of a housing of a connector according to an embodiment of this application. With reference to FIG. 2 and FIG. 7, in specific implementation, a first end of the locking structure 300 is inserted into the mounting groove 102. In a possible specific implementation, a locating protrusion 302 may be disposed at a second end of the locking structure 300, and a locating groove 1022 may be provided at an end part that is of the mounting groove 102 and that is close to the second end of the locking structure 300. When the locking structure 300 slides to the first position, the locating protrusion 302 is clamped into the locating groove 1022, so that the locking structure 300 is locked through cooperation between the locating protrusion 302 and the locating groove 1022. In another possible specific implementation, similarly, the locking structure 300 may be locked in a manner in which the locating protrusion cooperates with the locating groove. The implementation is different from the foregoing specific implementation in that positions at which the locating protrusion and the locating groove are disposed are changed. Specifically, the locating groove is provided at the second end of the locking structure 300, and the locating protrusion is disposed at the end part that is of the mounting groove 102 and that is close to the second end of the locking structure 300. When the locking structure 300 slides to the first position, the locating protrusion is clamped into the locating groove.

In a possible implementation, a stop protrusion 1023 is disposed at an end part that is of the mounting groove 102 and that is close to the first end of the locking structure 300. When the locking structure 300 slides to the first position, the first end of the locking structure 300 abuts against the stop protrusion 1023, to limit a sliding stroke of the locking structure 300.

During specific implementation, a removal hole 303 may be provided at the second end of the locking structure 300. When the locking structure 300 needs to be removed, a tool such as a screwdriver may be used to pry the locking structure 300 from the removal hole 303, so that the locking structure 300 returns to the pre-mounting position. After returning to the pre-mounting position, the locking structure 300 may be further removed from the housing 100. This facilitates replacement of the locking structure 300 with a new locking structure 300 without causing damage to the housing 100. In addition, the removed locking structure 300 can be reused for a specific quantity of times. After the locking structure 300 returns to the pre-mounting position, the first connection terminal may be removed from the first mounting hole 101, to remove the first connection terminal.

Refer to FIG. 5 again. In a possible implementation, a length of the limiting protrusion 301 of the locking structure 300 in the first direction may be less than a length of the limiting groove 201 in the first direction. When the locking structure 300 slides to the first position, there may be a specific gap between at least one end of the limiting protrusion 301 and the limiting groove 201 in the first direction, so that interference between the locking structure 300 and the first connection terminal 200 can be avoided when the locking structure 300 is removed. This facilitates the locking structure 300 being pushed from the pre-mounting position to the first position, and facilitates removal of the locking structure 300.

Refer to FIG. 1 and FIG. 5 again. In specific implementation, there may be a plurality of first mounting holes 101, and the plurality of first mounting holes 101 may be arranged in the second direction. Similarly, there may be a plurality of first connection terminals 200, and the plurality of first connection terminals 200 may be inserted into the plurality of first mounting holes 101 in a one-to-one correspondence. Correspondingly, a plurality of limiting protrusions 301 may be disposed on the locking structure 300, and the plurality of limiting protrusions 301 may be arranged in the second direction. In other words, the plurality of limiting protrusions 301 may be arranged in an extension direction of the locking structure 300. To be specific, the plurality of limiting protrusions 301 may be arranged in a direction from the first end to the second end of the locking structure 300. A quantity of limiting protrusions 301 may be the same as a quantity of first mounting holes 101. In actual application, when the locking structure 300 is in the pre-mounting position, the limiting protrusion 301 may be located between two adjacent first mounting holes 101, or located on one side that is of one first mounting hole 101 and that is in the second direction. For example, the limiting protrusion 301 located at one end in the plurality of limiting protrusions 301 may be located on one side of the first mounting hole 101 located at one end in the plurality of the first mounting holes 101. When the locking structure 300 is in the first position, the limiting protrusion 301 may be aligned with the first mounting hole 101 in the first direction, to cooperate with the limiting groove 201 of the first connection terminal 200. This limits the first connection terminal 200 from moving in the first direction.

In a possible implementation, the plurality of first mounting holes 101 may be simultaneously arranged in a third direction in addition to the second direction. The third direction is perpendicular to the second direction. Refer to the coordinate directions in FIG. 1. A direction indicated by a z-axis is the third direction. In other words, the plurality of first mounting holes 101 may be arranged into a plurality of rows. FIG. 1 shows an example of a case in which the plurality of first mounting holes 101 are arranged into two rows. Five first mounting holes 101 are arranged in one row, and three first mounting holes 101 are arranged in the other row. Similar to the foregoing specific implementation, the plurality of first connection terminals 200 are inserted into the plurality of first mounting holes 101 in a one-to-one correspondence. In other words, the plurality of first connection terminals 200 may also be arranged into the plurality of rows. In actual application, the plurality of limiting protrusions 301 may be disposed on two sides that are of the locking structure 300 and that are in the third direction, to respectively cooperate with the limiting grooves 201 of the first connection terminals 200 arranged into two rows. This limits the two rows of the first connection terminals 200 from moving in the first direction.

Refer to FIG. 3 again. In a possible implementation, the connector provided in this embodiment of this application may further include a second connection terminal. Correspondingly, a second mounting hole 103 extending in the first direction may be provided on the housing 100, and the second connection terminal is inserted into the second mounting hole 103. In actual application, the second connection terminal may be used as a power terminal (power pin) of the connector. Specifically, the second connection terminal may be a stamping terminal, so that material costs and assembling costs are low.

In specific implementation, there may be a plurality of second mounting holes 103, and the plurality of second mounting holes 103 may be arranged in the second direction and/or the third direction. Similarly, there may be a plurality of second connection terminals, and the plurality of second connection terminals may be inserted into the plurality of second mounting holes 103 in a one-to-one correspondence. In actual application, the second connection terminal may be locked through the locking structure. For details, refer to a disposing situation of the locking structure and the first connection terminal. Details are not described herein again.

In a possible implementation, a temperature sensor 500 may be further disposed on the housing 100, and the temperature sensor 500 may be disposed close to the second connection terminal, to monitor a temperature of the second connection terminal. For reference, the temperature sensor 500 may be a negative temperature coefficient (negative temperature coefficient, NTC) temperature sensor. Similarly, for reference, the temperature sensor 500 may be in a thermocouple type, or may be in a resistance type, for example, PT1000, in which a resistance value change is proportional to a temperature change.

In specific implementation, the temperature sensor 500 may be disposed between adjacent second connection terminals. For example, the temperature sensor 500 may be disposed between a positive power pin and a negative power pin, so that temperatures of the positive power pin and the negative power pin can be synchronously monitored, to prevent fire, and temperatures of the two power pins can be monitored through only one temperature sensor 500, to achieve a purpose of reducing a quantity of temperature sensors 500 and reducing connector costs. In specific implementation, a third mounting hole may be provided on the housing 100, the third mounting hole may be provided close to the second mounting hole 103, and the temperature sensor 500 may be mounted in the third mounting hole.

In actual application, when the second connection terminal is abnormally connected, the temperature sensor 500 may feed back the situation to a power loop, to cut off a main loop and form closed-loop protection. Specifically, real-time temperature information of the second connection terminal detected by the temperature sensor 500 may be transferred to the BMU through a line 501. Once a temperature is abnormal, a detection system generates an alarm, and at the same time cuts off a switch device (such as a relay or an insulated gate bipolar transistor (insulated gate bipolar transistor, IGBT)) of the main loop, to implement closed-loop protection.

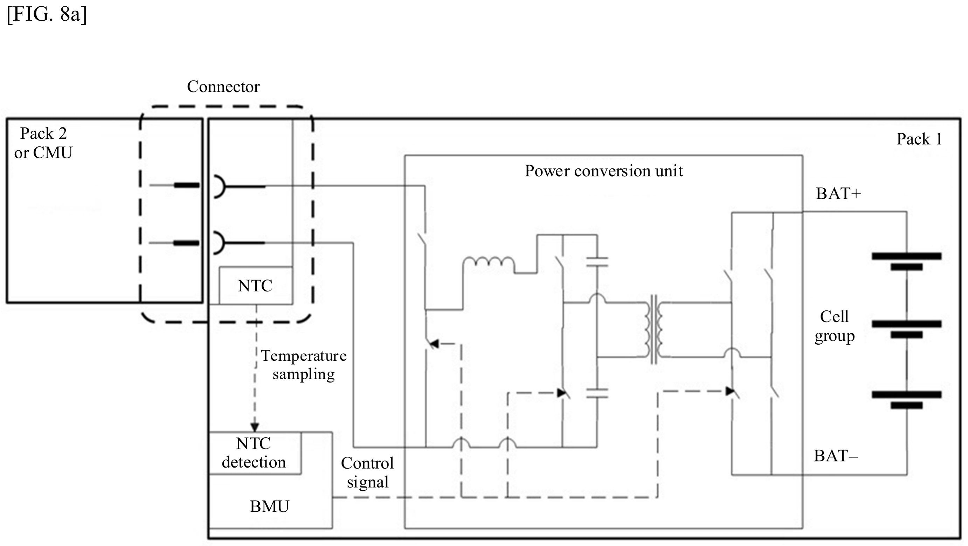

FIG. 8a is a diagram of connection of a temperature sensor of a connector according to an embodiment of this application. FIG. 8a shows a battery pack, a cell group of the battery pack, positive and negative electrodes (BAT+, BAT-) of the cell group, a battery management unit (BMU), a temperature sensor (represented as NTC), and a cell monitoring unit (cell monitor unit, CMU), and the temperature sensor may be electrically connected to the battery management unit.

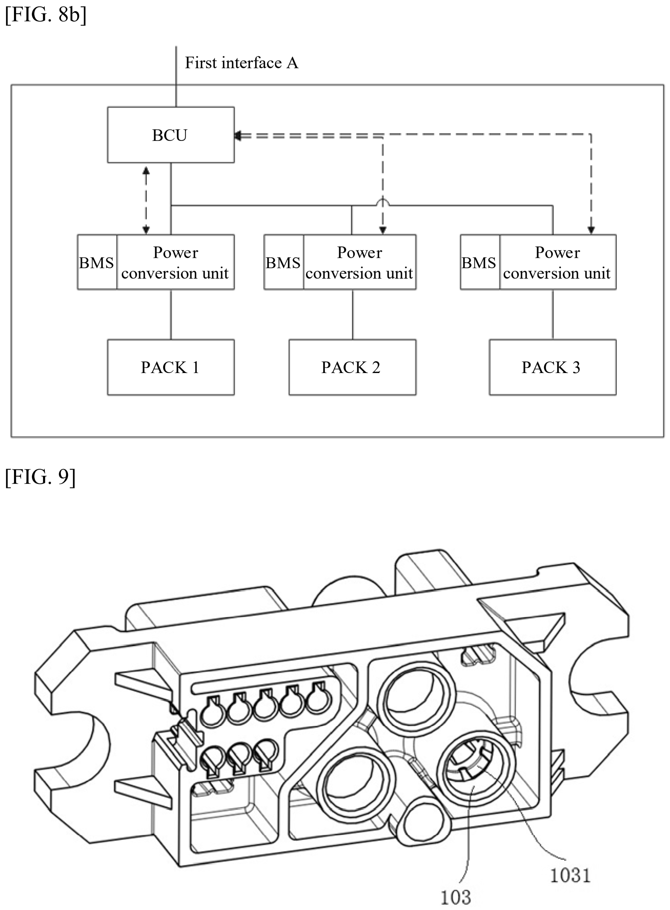

FIG. 8b is a diagram of an energy storage apparatus. The energy storage apparatus includes a plurality of energy storage modules, the energy storage modules are stacked in a height direction, and each energy storage module includes a battery pack and a power conversion unit. As shown in the figure, there are three packs, and each pack is connected to one power conversion unit in series and then connected to a battery control unit BCU in parallel. The power conversion unit may implement a bidirectional boost or buck function, and may include a DC/DC converter and an LLC circuit. The battery control unit BCU is configured to manage and control the plurality of battery packs. A first interface of the energy storage apparatus may be configured to connect to an inverter in a photovoltaic power generation system. In FIG. 8b, a solid line represents an electrical connection relationship, and a dashed line represents a signal transmission relationship.

The following describes possible algorithm logic of closed-loop protection with reference to FIG. 8a and FIG. 8b.

The temperature sensor reports a temperature detected at the connection terminal to the BMU. When the detected temperature is higher than 80 degrees, the power conversion unit controls charging and discharging power of the pack to reduce, to keep the temperature within 80 degrees. When the detected temperature is greater than 90 degrees, the power conversion unit stops charging and discharging, reports to the BCU to notify an overtemperature running status, and stops working. In this case, the pack is not working.

False alarm elimination: After powering off due to abnormality warning, restarting is performed after a first preset time (for example, m minutes). If temperature abnormality reoccurs after a second preset time (for example, n seconds), a false alarm is eliminated and powering off continues. If temperature abnormality reoccurs for p times within a third preset time (for example, t minutes), the connector is determined to be faulty, the device is permanently shut down, and an alarm is reported to a remote device.

Can be used through derating: A derating mode can be selected before replacing the connector in a case of guaranteeing emergency power of a user. For example, restarting is performed after a fourth preset time (for example, m1 minutes), and power is reduced to 90%. If temperature abnormality reoccurs after a fifth preset time (for example, n1 seconds), powering off continues. Restarting is performed after a sixth preset time (for example, m2 minutes), and the power is reduced to 80%. The rest may be deduced by analogy. If temperature abnormality reoccurs after the power is reduced to 50%, the connector is determined to be in a high-risk state, the device is permanently shut down, and an alarm is reported to a remote device.

In a specific application scenario, the connector provided in this embodiment of this application may be used as a male connector, or may be used as a female connector, and a main difference lies in different connection terminals. In specific use, two connectors, one male connector and one female connector, are inserted into and cooperate with each other, to implement electrical connection between different devices. With reference to the foregoing description, when the connector is used as the female connector, the first connection terminal 200 may be used as a signal female terminal. In this case, a spring plate may be disposed on the first connection terminal 200, and a clamping slot may be provided in the first mounting hole 101. When the first connection terminal 200 is assembled onto the first mounting hole 101, the spring plate is clamped into the clamping slot, to lock the first connection terminal 200. The locking structure 300 is inserted into the mounting groove 102 to implement secondary locking. When the first connection terminal 200 needs to be removed, a tool such as a long and thin awl may be used to poke into the first mounting hole 101 and press the spring plate on the first connection terminal 200, to pull, from a tail of the first connection terminal 200, the first wire 202 connected to the first connection terminal 200, so that the first connection terminal 200 is removed from the first mounting hole 101.

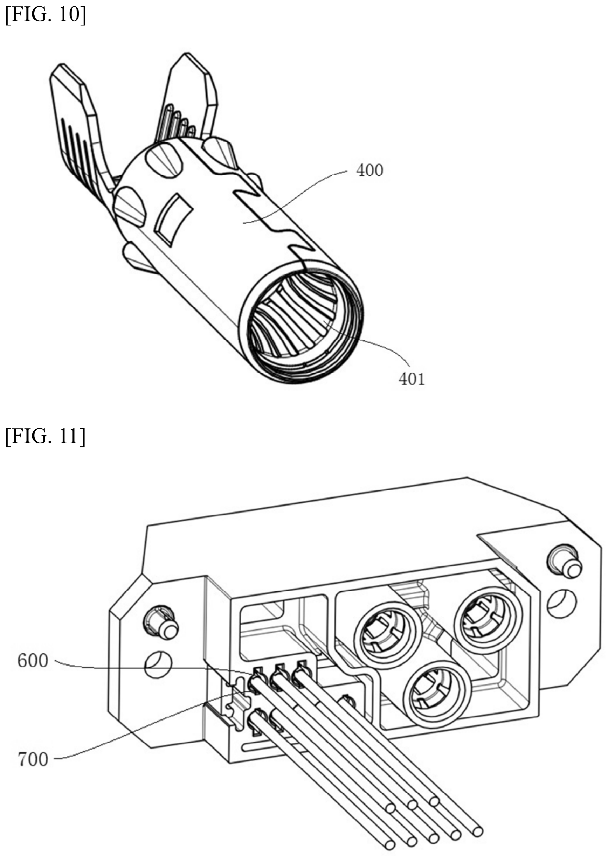

FIG. 9 is a diagram of a structure of a housing of a connector according to an embodiment of this application. FIG. 10 is a diagram of a structure of a second connection terminal of a connector according to an embodiment of this application. When the connector is used as the female connector, the second connection terminal may be used as a power female terminal. With reference to FIG. 9 and FIG. 10, a first supporting spring coil 1031 may be disposed in the second mounting hole 103, and the first supporting spring coil 1031 is clamped into the second mounting hole 103. After crimping the wire, the second connection terminal is inserted into the second mounting hole 103, and is clamped into the first supporting spring coil 1031, to lock the second connection terminal. In addition, a crown spring 401 may be disposed in the second connection terminal 400, so that the second connection terminal 400 is stably connected to a power male terminal.

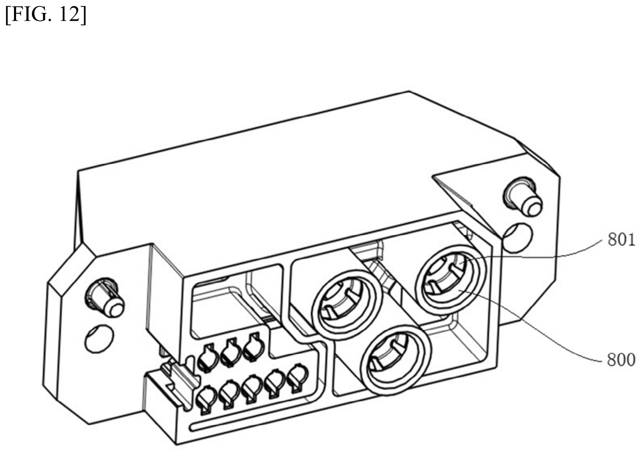

FIG. 11 is a diagram of a structure of a first connection terminal of a connector according to an embodiment of this application. FIG. 12 is a diagram of a structure of a housing of a connector according to an embodiment of this application. When the connector is used as a male connector, the first connection terminal may be used as a signal male terminal, and the second connection terminal may be used as the power male terminal. With reference to FIG. 11 and FIG. 12, similarly, after crimping the wire, the signal male terminal 600 is inserted into a signal male terminal mounting hole 700 to complete clamping. This implements locking of the signal male terminal 600, and implements secondary locking through the locking structure. A second supporting spring coil 801 is mounted in a power male terminal mounting hole 800. After crimping the wire, the power male terminal (not shown in the figure) is inserted into the power male terminal mounting hole 800, and is clamped into the second supporting spring coil 801.

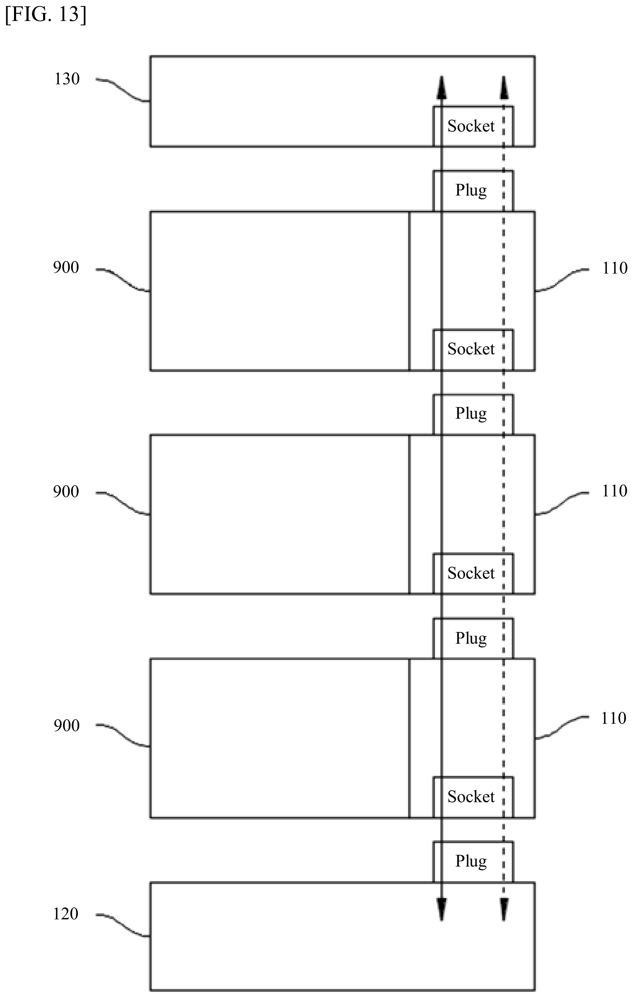

FIG. 13 is a diagram of a structure of an energy storage module according to an embodiment of this application. An embodiment of this application further provides an energy storage module. The energy storage module may include an energy storage portion 900 and the connector in the foregoing embodiments. The connector is electrically connected to the energy storage portion 900. The energy storage portion 900 may be a battery pack or another energy storage device. In addition, the energy storage module may further include a battery management system (battery management system, BMS) device. The BMS device 110 is electrically connected to the energy storage portion 900, and the connector may be disposed on the BMS device 110. In actual application, one connector may be separately disposed at the top and the bottom of the BMS device 110, and the two connectors are one male connector and one female connector, so that connection between the BMS devices 110 can be implemented, that is, connection between the energy storage portions 900 can be implemented. A plug and a socket in FIG. 13 respectively represent two connectors, one male connector and one female connector, that can be inserted into and cooperate with each other, and a pluggable direction of the connector may be a vertical direction.

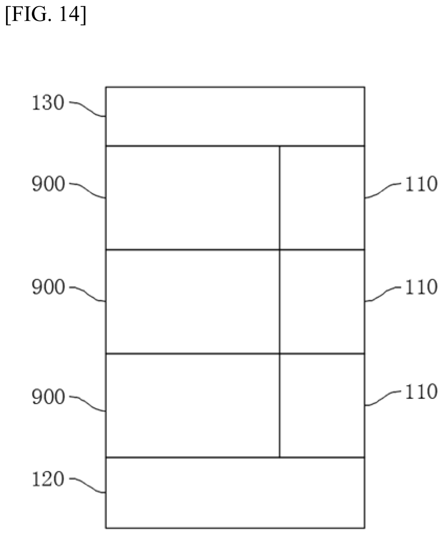

FIG. 14 is a diagram of a structure of an energy storage apparatus according to an embodiment of this application. FIG. 14 shows an assembled structure of the energy storage apparatus, and FIG. 13 shows a disassembled structure of the energy storage apparatus. An embodiment of this application further provides an energy storage apparatus. The energy storage apparatus may include a plurality of energy storage modules according to the foregoing embodiment, a battery main control unit (battery cluster unit, BCU), and a base 120. The plurality of energy storage modules may be stacked in the height direction, and are disposed on the base 120 as a whole. The battery main control unit 130 may be disposed on the plurality of stacked energy storage modules. FIG. 13 and FIG. 14 only show three vertically stacked energy storage modules. In actual application, a quantity of energy storage modules included in the energy storage apparatus is not limited. The energy storage modules may be electrically connected through the connector in the foregoing embodiments. It may be understood that two connectors connecting two energy storage modules form one pair of male and female connectors. The energy storage module at a top layer may be connected to the battery main control unit 130 through one pair of male and female connectors, and the energy storage module at a bottom layer may be connected to the base 120 through one pair of male and female connectors.

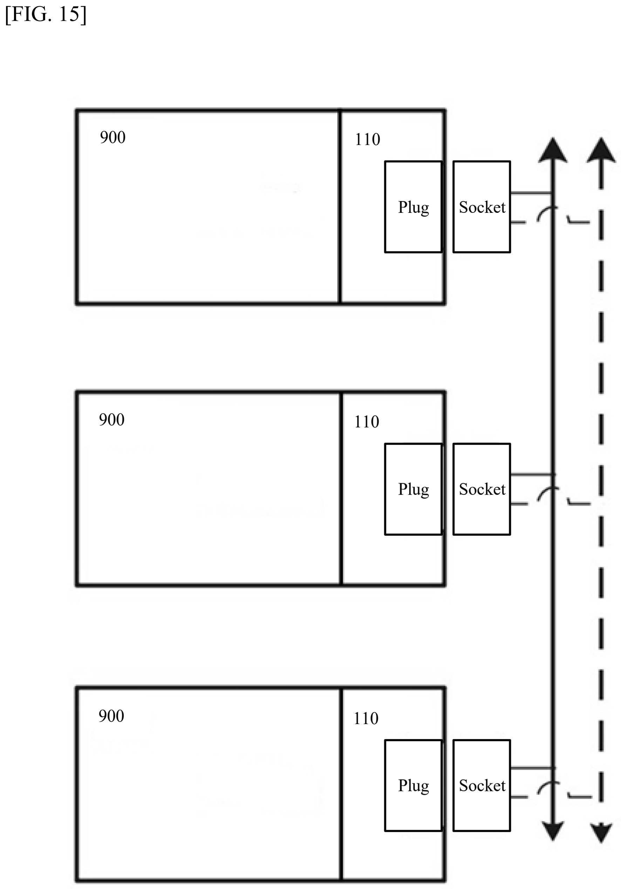

FIG. 15 is a diagram of disassembling of a partial structure of an energy storage apparatus according to another embodiment of this application. In specific implementation, in addition to the connection manner of the energy storage modules shown in FIG. 13, another connection manner may be used between the energy storage modules. As shown in FIG. 15, connectors (for example, male connectors) may be disposed on sides of the BMS devices 110, and a plurality of energy storage modules are vertically stacked, other connectors (for example, female connectors) are inserted into the connectors, and the different other connectors are connected to each other, to implement connection between the BMS devices 110, namely, connection between the energy storage portions 900. A plug and a socket in FIG. 15 respectively represent two connectors, one male connector and one female connector, and a pluggable direction of the connector may be a horizontal direction.

Power transmission and signal transmission may be implemented between the energy storage modules through the connector. In FIG. 13 and FIG. 15, a solid line represents power flow transmission, and a dashed line represents signal flow transmission.

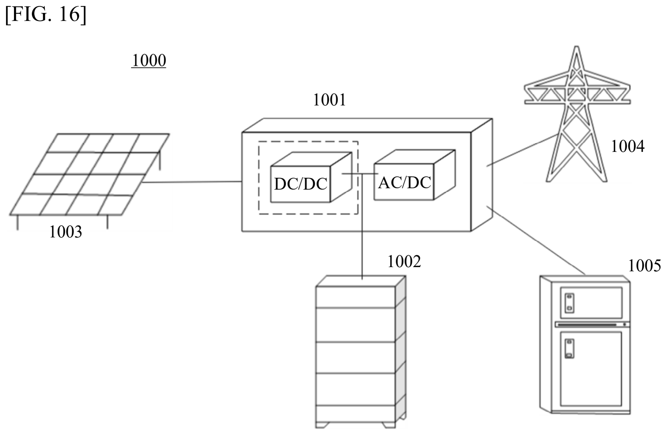

The energy storage apparatus described in FIG. 13 to FIG. 15 may be used in a photovoltaic energy storage system 1000 shown in FIG. 16. The photovoltaic energy storage system 1000 includes a power converter 1001 and the energy storage apparatus 1002, and may further include a photovoltaic array 1003 and a power grid 1004/an external load 1005. The power converter 1001 may integrate a DC/DC conversion circuit and a DC/AC conversion circuit. The energy storage apparatus 1002 may be located between the DC/DC conversion circuit and the DC/AC conversion circuit. Electric energy generated by the photovoltaic array can be used to charge the energy storage apparatus after boost or buck conversion is performed on the electric energy in the DC/DC conversion circuit. When the electric energy generated by the photovoltaic array is insufficient to supply power to the power grid/external load, electric energy stored in the energy storage apparatus may be transmitted to the power grid/external load through the DC/AC conversion circuit in the power converter. In addition, the energy storage apparatus may further receive power supply from the power grid, and an alternating current output by the power grid is converted into a direct current through the DC/AC conversion circuit, and then is transmitted to the energy storage apparatus, to charge the energy storage apparatus. Alternatively, the power converter includes only the DC/AC conversion circuit, the energy storage apparatus has a built-in DC/DC conversion circuit, and the energy storage apparatus directly receives direct current electric energy generated by the photovoltaic array. Therefore, a higher requirement is put forward for a capacity of the energy storage apparatus. Generally, in a residential energy storage scenario, a plurality of battery packs are stacked to increase the capacity of the energy storage apparatus.

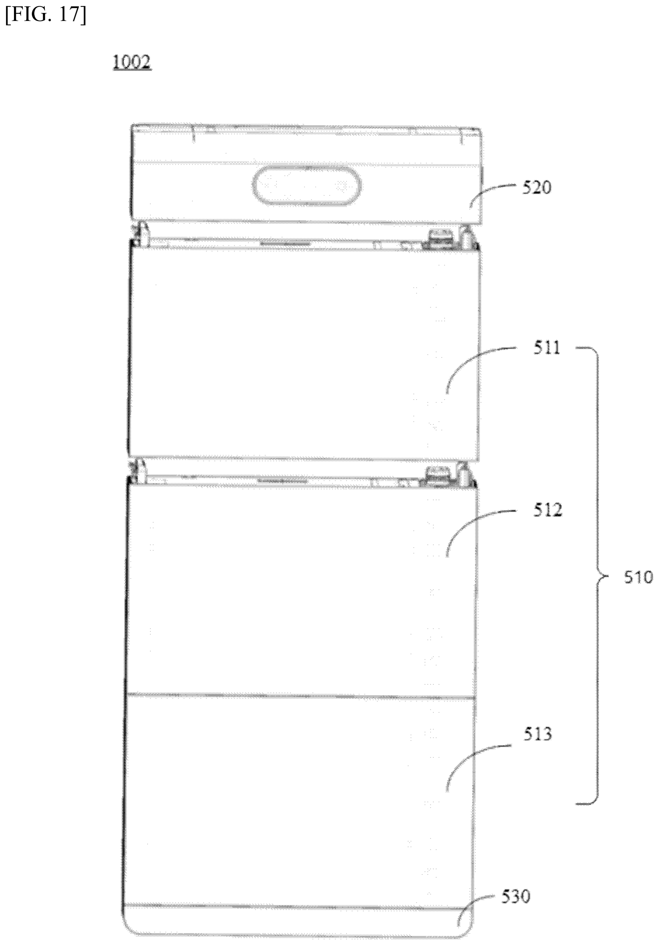

The stacked energy storage apparatuses described in the foregoing embodiments may be, for example, the energy storage apparatus 1002 of a stacked structure shown in FIG. 17. Refer to a diagram of a structure of the energy storage apparatus 1002 shown in FIG. 17. The energy storage apparatus 1002 includes a plurality of battery packs 510, and the plurality of battery packs 511 to 513 are sequentially stacked from bottom to top. The plurality of battery packs are stacked, so that a quantity of battery packs can be adaptively adjusted based on an actual application scenario, to meet a capacity requirement of the energy storage apparatus in different application scenarios.

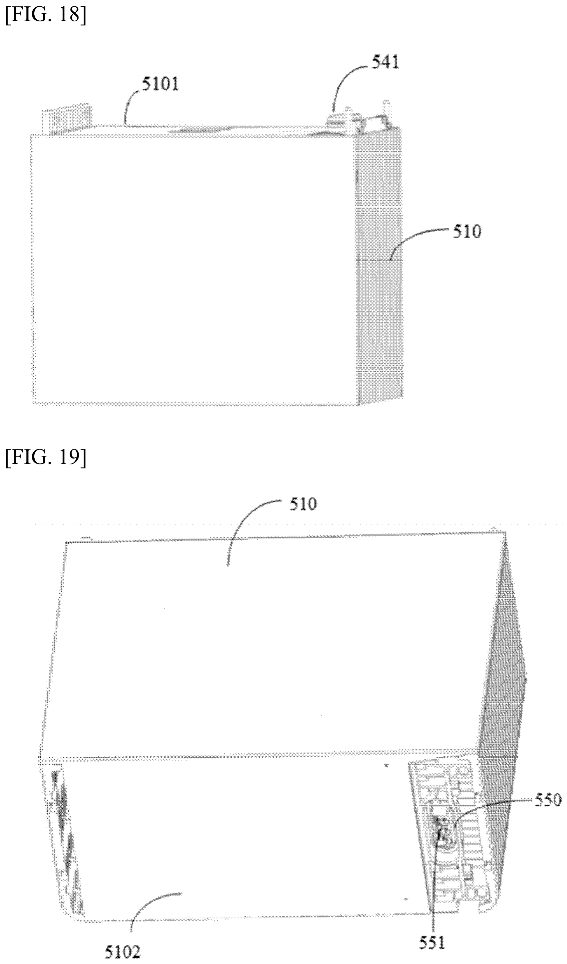

FIG. 18 and FIG. 19 are diagrams of structures of two adjacent battery packs stacked in an up-down manner in the foregoing energy storage apparatus 1002. To enhance guiding performance and locating accuracy of battery pack stacking, a first connector 540 and a second connector 550 are respectively disposed on two contact surfaces of adjacent battery packs. The first connector 540 protrudes from one contact surface, a groove 551 and the second connector 550 are disposed on the other contact surface, the second connector 550 is disposed inside the groove, and a protection part 541 is disposed around a periphery of the first connector 540, so that first-level guiding between the plurality of battery packs 510 is implemented through pluggable connection between the protection part 541 and the groove 551, and second-level guiding of the second connector 550 is implemented through pluggable connection between the first connector 540 and the second connector 550. A design of a concave-convex structure improves accuracy of interconnection between the plurality of battery packs 510. The protection part 541 and the groove 551 are respectively disposed around peripheries of the first connector 540 and the second connector 550. In this way, when the battery pack 510 is placed on the battery pack 510, the protection part 541 is inserted into the groove 551 on a lower surface 5102 of the battery pack, to implement a guiding function, and prevent a misalignment problem from occurring during direct interconnection between the terminals in the connectors and consequently causing damage to the terminals, and the protection part 541 can protect the connector, and prevent foreign matter from entering the connector. Moreover, the first connector 540 and the second connector 550 do not need to be exposed outside the battery pack 510, to reduce a risk of failure and being affected with damp of the terminal of the connector, and improve safety performance of the terminal inside the connector. The protection part 541 may be made of a metal material with high rigidity and strength, to enhance mechanical strength of the protection part 541.

In this embodiment of this application, an example in which the first connector and the protection part protrude from an upper surface of the battery pack, and the groove and the second connector are disposed on the lower surface of the battery pack is used. Refer to the diagrams of the structures of the battery packs shown in FIG. 18 and FIG. 19. The first connector 540 protrudes from the upper surface 5101 of each battery pack 510, the groove 551 is provided on both the lower surface 5102 of each battery pack 510 and a lower surface of a BCU 520, and the second connector 550 is disposed in the groove 551. In this embodiment of this application, an example in which the energy storage apparatus includes three battery packs 511, 512, and 513 that are stacked from bottom to top is used. As shown in FIG. 17, the first connector 540 on the upper surface of the battery pack 512 is inserted into the groove 551 on the lower surface of the battery pack 511 and is connected to a corresponding second connector 550, so that the battery pack 511 is fastened to the battery pack 512, and the battery pack 511 and the battery pack 512 are connected in series or in parallel. A structure disposing of the first connector 540 protruding from the surface of the battery pack 510 and a structure disposing of the groove 551 on the lower surface of the battery pack 510 enable the user to only need to gently lift the battery pack 510 and then slowly put the battery pack 510 down when assembling the energy storage apparatus 1002, and under a guiding function of the protection part 541 and the groove 551, the first connector 540 and the second connector 550, and a gravity function of the battery pack 510, different battery packs 510 are automatically positioned and embedded into one whole. This helps implement precise locating and quick mounting of the energy storage apparatus 500 without a need of additional connection to a cable, to improve assembling efficiency of the energy storage apparatus 1002, and reduce a risk of wrong/missed cable connection.

According to the energy storage apparatus 1002 provided in this embodiment of this application, any quantity of battery packs 510 may be stacked in an up-down manner according to an actual requirement, so that a battery capacity is conveniently increased or decreased, application scenarios of the energy storage apparatus 1002 are enriched, and a mounting operation is convenient.

Positions at which the groove 551 and the first connector 540 are disposed may alternatively be reversed. In other words, the groove 551 and the second connector 550 are disposed on the upper surface of the battery pack 510, and the first connector 540 is disposed on the lower surface of the battery pack 510. The first connector 540 disposed on the lower surface of the battery pack 510 is inserted into the groove 551 provided on the upper surface of the adjacent battery pack 510, to implement connection between the plurality of battery packs 510.

Specific positions and a quantity of first connectors 540 in the battery pack 510 are not specifically limited in this embodiment of this application. A person skilled in the art can perform selection and design according to an actual requirement.

To improve accuracy of alignment of the plurality of battery packs 510, in a same battery pack 510, the first connector 540 and the second connector 550 are disposed vertically opposite to each other, or in a same battery pack 510, orthographic projections of the first connector 540 and the second connector 550 onto a horizontal plane are centrally symmetrically disposed with respect to a center of the battery pack 510. An orthographic projection of the protection part 541 in the z direction falls into an orthographic projection of the groove in the z direction. A largest gap between edges of a periphery of the protection part 541 is less than or equal to a largest gap between inner walls of the groove 551, and a periphery size of the protection part 541 is less than or equal to a size design of an inner diameter of the groove 551. In this way, the protection part 541 is more accurately inserted into the groove 551, and specific floating space is provided for the protection part 541 when the protection part is interconnected with the groove 551. This increases tolerance of a material processing error. For example, a size difference between the inner diameter of the groove 551 and the periphery of the protection part 541 is 1 mm. A height of the periphery of the protection part 541 is less than or equal to a depth of the groove 551. In this way, the protection part 541 and the groove 551 are perfectly interconnected, to avoid a gap between contact surfaces of two adjacent battery packs 510, an upper battery pack and a lower battery pack. This prevents foreign matter from entering the energy storage apparatus 1002, and improves safety and reliability of the energy storage apparatus 1002.

To improve sealing performance of the energy storage apparatus 1002, a sealing ring is sleeved on the periphery of the protection part 541, to ensure a waterproof and dustproof function between the first connector 540 and the groove 551. The sealing ring is disposed around a surface of a periphery of the groove 551, to ensure waterproof and dustproof performance of the first connector 540 after the first connector is inserted into the groove 551.

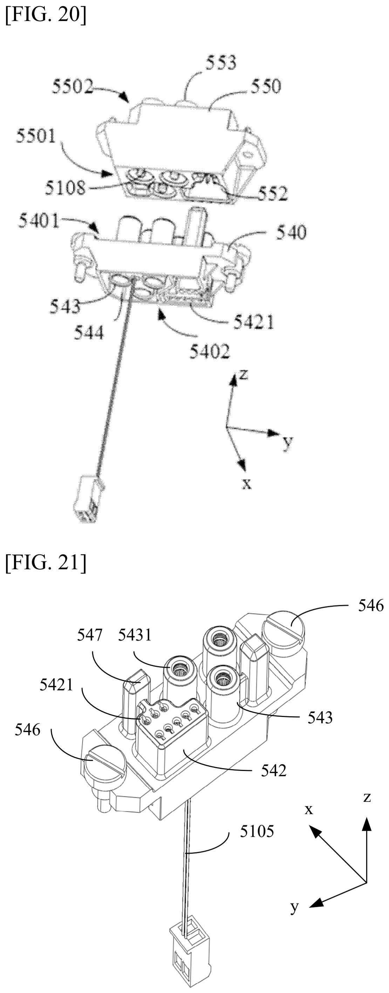

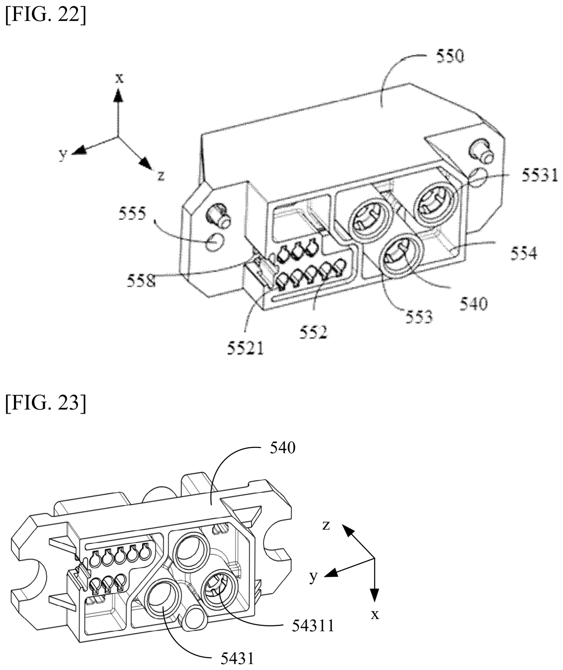

Still refer to the diagrams of the structure of the second connector 550 in the z direction shown in FIG. 20 and FIG. 22. One side that is of the second connector 550 and that is away from the battery pack 510 in which the second connector is located is a second side 5502, the second side 5502 has a second accommodation cavity 554, the socket 552 extends to the second accommodation cavity 554, the socket 552 includes a plurality of second mounting holes 5521, the second mounting hole 5521 extends in the z direction, and the plug 542 of the first connector 540 is inserted into the socket 552 of the second connector 550. The plurality of first mounting holes 5421 on the first connector 540 and the plurality of second mounting holes 5521 on the second connector 550 are in a one-to-one correspondence. A diameter of a periphery of the plug 542 may be slightly less than an inner diameter of the socket 552. The plug 542 cooperates with the socket 552, to implement pluggable connection between the first connector 540 and the second connector 550. This further improves precise alignment between the battery pack 510 and the battery pack 510. In addition, a same quantity of first mounting holes 5421 and second mounting holes 5521 that are disposed opposite to each other are respectively provided on the first connector 540 and the second connector 550, to provide mounting space for wiring terminals that respectively extend from adjacent battery packs 510. This prevents a cable from being exposed to outside the energy storage apparatus 500, and reduces a risk such as a risk of being affected with damp or a risk of damage of the wiring terminals. The first connector 540 and the second connector 550 cooperate with each other to implement cooperation between the signal terminal and the electrical terminal on the battery pack 510, so that signal connection and electrical connection can be implemented after assembling of the plurality of battery packs 510 is completed, without using a conventional cable. This reduces mounting labor hours and reduces risks of wrong and missed connection.

After the plurality of battery packs 510 are stacked, electrical terminals and signal terminals between the plurality of battery packs 510 need to be connected to implement electrical connection between the plurality of battery packs 510. The electrical terminals and the signal terminals of the battery packs 510 are electrically connected through the first connector 540 and the second connector 550. For example, each battery pack 510 includes a plurality of first connection terminals 5105 and a plurality of second connection terminals 5106. The plurality of first connection terminals 5105 and the plurality of first mounting holes 5421 are in a one-to-one correspondence, the plurality of first connection terminals 5105 are respectively inserted into the plurality of first mounting holes 5421, the plurality of second connection terminals and the plurality of second mounting holes 5521 are in a one-to-one correspondence, the plurality of second connection terminals are respectively inserted into the plurality of second mounting holes 5521, and the first connection terminals 5105 are electrically connected to corresponding second connection terminals 5106.

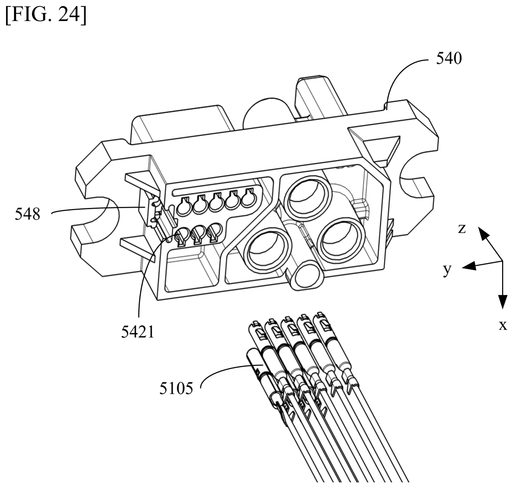

Refer to the diagram of a structure of the first connector shown in FIG. 23 and the diagram of assembling of the first connector and the first connection terminal shown in FIG. 24. A structure in which the battery pack 512 and the battery pack 511 are stacked is used as an example for description. The first connection terminal 5105 may be a signal terminal extending from the upper surface of the battery pack 512, the second connection terminal 5106 may be a signal terminal extending from the lower surface of the battery pack 511, and the first connection terminal 5105 is inserted into the first mounting hole 5421. Refer to the diagram of assembling of the second connector and the second connection terminal shown in FIG. 19. The second connection terminal 5106 is inserted into the second mounting hole 5521. Further, as shown in FIG. 14, the first mounting hole 5421 and the second mounting hole 5521 are correspondingly provided to implement electrical connection between the first connection terminal 5105 and a corresponding second connection terminal 5106.

Specifically, both the first connection terminal 5105 and the second connection terminal 5106 may be stamping terminals, and material costs and assembling costs are low. In a stacking process of battery packs, even if the connectors are subjected to heavy impact, pin dislodgement does not occur, and connection reliability can be ensured regardless of oblique insertion or vertical drop, to implement blind-insertion mounting in a heavy stacking scenario.

Similarly, signal connection between the battery pack 510 and the BCU 520 is implemented in this connection manner of interconnection. This reduces a cable for stacking the battery packs 510, reduces risks of incorrect connection and missing connection during mounting, and reduces mounting labor hours and labor costs of the energy storage apparatus 500.

It should be understood that, the first connector 540 and the second connector 550 may be manufactured as an integrated part by using an integrated injection molding process, and a material may be plastic, a structure is simple, and costs are low.

The energy storage apparatus provided in this embodiment of this application may be applicable to a direct current scenario, or may be applicable to an alternating current scenario. In addition to the foregoing energy storage module, the energy storage apparatus may use another power module, battery module, or the like with a similar requirement of power transmission and signal transmission, such as an uninterruptible power supply (uninterruptible power supply, UPS) module, server, or terminal device.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A connector, comprising a housing, a first connection terminal, and a locking structure, wherein
a first mounting hole extending in a first direction and a mounting groove extending in a second direction are provided on the housing, and the second direction is perpendicular to the first direction;
the first connection terminal is inserted into the first mounting hole, and a limiting groove is provided on the first connection terminal; and
the locking structure is slidably connected to the mounting groove, a limiting protrusion is disposed on the locking structure, and when the locking structure slides to a first position, the limiting protrusion is in the limiting groove, to limit the first connection terminal from moving in the first direction.

2. The connector according to claim 1, wherein a sliding rail is disposed on a side wall of the mounting groove, and a sliding groove cooperating with the sliding rail is provided on the locking structure; or
a sliding groove is provided on a side wall of the mounting groove, and a sliding rail cooperating with the sliding groove is disposed on the locking structure.

3. The connector according to claim 1 or 2, wherein a first end of the locking structure is inserted into the mounting groove;
a locating protrusion is disposed at a second end of the locking structure, and a locating groove is provided at an end part that is of the mounting groove and that is close to the second end of the locking structure; or a locating groove is provided at a second end of the locking structure, and a locating protrusion is disposed at an end part that is of the mounting groove and that is close to the second end of the locking structure; and
when the locking structure slides to the first position, the locating protrusion is clamped into the locating groove.

4. The connector according to any one of claims 1 to 3, wherein the first end of the locking structure is inserted into the mounting groove; and
a stop protrusion is disposed at an end part that is of the mounting groove and that is close to the first end of the locking structure, and when the locking structure slides to the first position, the first end of the locking structure abuts against the stop protrusion.

5. The connector according to any one of claims 1 to 4, wherein a length of the
limiting protrusion in the first direction is less than a length of the limiting groove in the first direction.

6. The connector according to any one of claims 1 to 5, wherein there are a plurality of first mounting holes, and the plurality of first mounting holes are arranged in the second direction;
there are a plurality of first connection terminals, and the plurality of first connection terminals are respectively inserted into the plurality of first mounting holes; and
there are a plurality of limiting protrusions, and the plurality of limiting protrusions are arranged in the second direction.

7. The connector according to any one of claims 1 to 6, wherein there are the plurality of first mounting holes, the plurality of first mounting holes are arranged in a third direction, and the third direction is perpendicular to the second direction;
there are the plurality of first connection terminals, and the plurality of first connection terminals are respectively inserted into the plurality of first mounting holes; and
there are the plurality of limiting protrusions, and the plurality of limiting protrusions are disposed on two sides of the locking structure in the third direction.

8. The connector according to any one of claims 1 to 7, further comprising a second connection terminal, wherein
a second mounting hole extending in the first direction is provided on the housing, and the second connection terminal is inserted into the second mounting hole.

9. The connector according to claim 8, wherein a temperature sensor is disposed on the housing, and the temperature sensor is disposed close to the second connection terminal.

10. An energy storage module, comprising an energy storage portion and the connector according to any one of claims 1 to 9, wherein
the connector is electrically connected to the energy storage portion.

11. An energy storage apparatus, comprising a plurality of energy storage modules according to claim 10, wherein
the plurality of energy storage modules are stacked in a height direction, and the energy storage modules are electrically connected through the connector.

12. An energy storage apparatus, comprising a plurality of energy storage modules,
wherein the plurality of energy storage modules are stacked in a height direction, the energy storage modules are electrically connected through the connector, the energy storage module comprises a battery and a power conversion unit, each battery is connected in parallel through the connector after being connected to a corresponding power conversion unit in series, a temperature sensor is disposed at a connection terminal of the connector, and the temperature sensor is configured to collect a temperature at the connection terminal;
the power conversion unit is configured to reduce, in response to a value of the temperature being greater than a first threshold, charging and discharging power of the battery connected in series to the power conversion unit; and/or
the power conversion unit is configured to stop working in response to the temperature being greater than a second threshold, and the first threshold is less than the second threshold and is greater than 0.
